(19) Europäisches Patentamt
European Patent Office
Office européen des brevets

(11) **EP 3 482 622 B1**

(12) **EUROPÄISCHE PATENTSCHRIFT**

(45) Veröffentlichungstag und Bekanntmachung des Hinweises auf die Patenterteilung:
**26.06.2024 Patentblatt 2024/26**

(21) Anmeldenummer: **18204780.3**

(22) Anmeldetag: **07.11.2018**

(51) Internationale Patentklassifikation (IPC):
**G01C 21/04** (2006.01)  **G05D 1/00** (2024.01)
**G06V 10/75** (2022.01)  **G06V 20/56** (2022.01)
**G01C 21/00** (2006.01)  **A01D 34/00** (2006.01)

(52) Gemeinsame Patentklassifikation (CPC):
**G01C 21/005; G01C 21/04; G05D 1/0234; G06V 10/758; G06V 20/588;** A01D 34/008

(54) **VERFAHREN ZUR AUTOMATISCHEN FÜHRUNG EINES FAHRZEUGS ENTLANG EINES VIRTUELLEN SCHIENENSYSTEMS**

METHOD FOR AUTOMATICALLY GUIDING A VEHICLE ALONG A VIRTUAL RAIL SYSTEM

PROCÉDÉ DE GUIDAGE AUTOMATIQUE D'UN VÉHICULE LE LONG D'UN SYSTÈME DE RAILS VIRTUEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.11.2017 DE 102017220291**

(43) Veröffentlichungstag der Anmeldung:
**15.05.2019 Patentblatt 2019/20**

(73) Patentinhaber: **Robert Bosch GmbH**
**70442 Stuttgart (DE)**

(72) Erfinder: **Simon, Stephan**
**31079 Sibbesse (DE)**

(56) Entgegenhaltungen:
**WO-A1-2015/090399    DE-A1-102013 202 075**

**Beschreibung**

Die vorliegende Erfindung betrifft ein Verfahren zur automatischen Führung eines Fahrzeugs entlang vorgegebener Wegen. Ferner betrifft die Erfindung ein Computerprogramm, das jeden Schritt des Verfahrens ausführt, wenn es auf einem Rechengerät abläuft, sowie ein maschinenlesbares Speichermedium, welches das Computerprogramm speichert und ein elektronisches Steuergerät, welches eingerichtet ist, um das erfindungsgemäße Verfahren auszuführen. Schließlich betrifft die Erfindung ein Fahrzeug, welches eingerichtet ist, entlang der vorgegebenen Wege automatisch geführt zu werden.

Stand der Technik

Heutzutage werden automatisch fahrende Fahrzeuge bzw. Roboter in vielen Situationen eingesetzt, die auf eine Selbstlokalisation angewiesen sind. Bei Fahrzeugen, die eine Bilderfassungsvorrichtung, wie z. B. eine Kamera, aufweisen, werden typischerweise Merkmale im Bild detektiert, den Merkmalen Deskriptoren zugeordnet und dann die aktuellen Merkmale im Bild mit Merkmalen einer Datenbank verglichen und die Position zugeordnet. Bei der Zuordnung von Merkmal und Position wird oftmals noch eine Distanzmetrik beachtet. Ein in diesem Zusammenhang verwendetes Verfahren ist "Simultaneous Localization and Mapping" (SLAM). In diesem Verfahren ist vorgesehen, dass das Fahrzeug in der Lage ist, an jeder Position eine Karte aufzubauen, sich innerhalb dieser Karte selbst zu lokalisieren und seine Position exakt zu verfolgen.

Üblicherweise werden hervorstechende Merkmale (salient features) von Strukturen zur Lokalisation verwendet, die auch unter anderen Betrachtungswinkeln und unter anderen Abständen wiederauffindbar sind, und diesen Deskriptoren zugeordnet. Als Beispiele sind Pfosten, Bäume bzw. Teile davon, Gebäudeteile, Wände, Ecken usw. genannt. Diese Strukturen befinden sich meist im Fernfeld des Fahrzeugs. Diese Strukturen sind oftmals nicht zeitbeständig oder können unter bestimmten Lichtverhältnissen nicht wahrgenommen werden. Dann sind die Merkmale nicht wiederauffindbar. Es kann auch vorkommen, dass keine wiederauffindbaren hervorstechenden Merkmale vom Fahrzeug erfasst werden können, weil keine geeigneten Strukturen im Umfeld vorhanden sind, beispielsweise weil das Umfeld strukturarm und das Fernfeld, beispielsweise aufgrund einer niedrigen Kamerahöhe, schlecht einsehbar ist.

Die automatisch fahrenden Fahrzeuge sollen sich oftmals auf vorgebbaren Wegen bewegen. Beispielsweise sollen sich automatisch fahrende Kraftfahrzeuge auf Straßen (und zu Parkplätzen) bewegen, automatisch fahrende Transportfahrzeuge, beispielsweise in Industriehallen, sollen sich auf geplanten Wegen zwischen Abholstelle und Abladestellen bewegen.

Die DE 10 2013 202 075 A1 beschreibt eine Bewegungsstrategieerarbeitungs- und/oder Navigationsvorrichtung für ein autonomes Fortbewegungsgerät, bei dem Umgebungsdaten mittels einer Sensoreinheit erfasst werden, und daraus eine großflächige Signatur des Untergrunds erstellt wird. Bei einer Anlernfahrt werden die Signaturen als Referenzsignaturen mit der zugehörigen Position gespeichert. Im autonomen Betrieb werden zur Lokalisation und Navigation des Fortbewegungsgeräts die aktuell erfassten Signaturen über ein Ähnlichkeitsmaß mit den Referenzsignaturen verglichen, z. B. durch Kreuzkorrelation.

Die WO 2015/090399 A1 betrifft einen Reinigungsroboter, der sich selbstständig in einem Raum bewegt. Über eine Sensoreinheit nimmt der Reinigungsroboter Daten von Objekten aus der Umgebung auf. Aus den Daten wird ein Orientierungspunkt (landmark) identifiziert und aus den Informationen über den Orientierungspunkt eine Signatur für den Orientierungspunkt erstellt. Es ist vorgesehen die Signatur als Referenzsignatur zu speichern. Zudem wird eine aktuell erstellte Signatur für den Orientierungspunkt mit den zuvor aufgenommenen Referenzsignaturen verglichen. Wenn die Signatur mit einer Referenzsignatur übereinstimmt, so wird die Position des Orientierungspunkts bestimmt und der Reinigungsroboter anhand der Positionsbestimmung bewegt. Als Orientierungspunkte werden hier feste Objekte oder Hindernisse in einem Gebäude genannt, von denen einige in einem Raum vorhanden sind, sodass nur einige wenige Signaturen erstellt werden. Der Untergrund bzw. der Boden wird hier nicht als Orientierungspunkt vorgeschlagen.

Offenbarung der Erfindung

Die Erfindung wird durch die beigelegten Ansprüche definiert. Es wird ein Verfahren zur automatischen Führung eines Fahrzeugs entlang vorgegebener Wegen vorgeschlagen. Diese vorgegebenen Wege werden im Folgenden als "virtuelles Schienensystem" bezeichnet. Der Begriff Fahrzeug umfasst hier neben Kraftfahrzeugen auch Nutzfahrzeuge, Transportgeräte, selbstfahrende mobile Roboter, Flurförderzeuge, bis hin zu Luftfahrzeugen, die sich nahe dem Boden bewegen, wie z. B. Drohnen oder gelandete Flugzeuge.

Es werden Signal-Messpunkte eines Untergrunds, über den sich das Fahrzeug bewegt und/oder in Zukunft bewegen wird, erfasst. Innerhalb einer Schablone, die eine Mehrzahl von Signal-Messpunkten des Sensorsignals abdeckt, sind mehrere Unterschablonen vorgesehen. Für jede Unterschablone wird aus den Werten und/oder den Vektoren der Signal-Messpunkte, die zumindest teilweise von der jeweiligen Unterschablone abgedeckt werden oder sich in deren Umfeld befinden, ein Unterschablonen-Messwert oder -vektor gebildet. Für die Unterschablonen wird eine Vorverarbeitung durchgeführt, wobei aus den vorverarbeiteten Unterschablonen-Messwerten/-Vektoren ein Merkmal gebildet wird. Die Merkmale werden aus einem Sensorsignal gewonnen, wobei das Sensorsignal beispielsweise ein zweidimensionales Graustufensignal oder ein zweidimensionales Farbbildsignal einer Bilderfassungseinheit, z. B. einer Kamera, des Fahrzeugs ist. Auch kann das Sensorsignal aus Signalen einer eindimensionalen Bilderfassungseinheit gebildet werden, wenn sich das Fahrzeug in die zweite Richtung bewegt. Das Merkmal ist eine aus dem Signal extrahierte Zwischenstufe, mit der die Position auf dem Untergrund charakterisiert werden kann. Hierzu wird ein der Position zugeordneter lokaler Ausschnitt des Signals betrachtet. Beispielsweise kann eine Faltung oder eine Filterung des Ausschnitts mit einem oder mehreren Wavelets erfolgen, aus dem ein N-dimensionaler Vektor für das Merkmal hervorgeht. Vorzugsweise werden die Merkmale an jeder Position auf die gleiche Weise gebildet. Durch gewichtete Verknüpfungen der Unterschablonen-Werte/-Vektoren und zumindest einer Schwellwertentscheidung wird zu dem Merkmal eine zugehörige Signatur gebildet.

Der Untergrund kann jede Art von künstlichem oder natürlichem Untergrund sein, der unterscheidbare Merkmale aufweist, die über einen Zeitraum zumindest teilweise unverändert bleiben. Insbesondere kann das Verfahren bei einem Boden mit zufälligem Muster angewendet werden. Typische zufällige Muster bieten ausreichend Variation in ihrer Oberflächenstruktur, Helligkeit oder Farbigkeit, um an unterschiedlichen Positionen unterscheidbare Merkmale erfassen zu können. Hierfür eignen sich unter anderem folgende Bodentypen:

- Asphalt;
- Natur- oder Kunststeinboden oder Fliesen mit zufälliger Oberfläche;
- Beton- oder Estrichboden;
- mit Farbe versiegelter Hartboden, wobei in die noch nasse Farbe so genannte Farbchips mit anderen Farben eingestreut werden;
- Filzboden;
- Korkboden;
- Teppich;
- Linoleumboden;
- industriell gefertigte Kunststoffböden mit zufälliger Oberfläche;
- Feld- oder Ackerboden; oder
- Rasen oder Grünflächen.

Die Merkmale des Untergrunds werden in Arbeitssignaturen umgewandelt. Signaturen sind Kodierungen der Merkmale bzw. des dazugehörigen Sensorsignals, die charakteristisch für die Position auf dem Untergrund sind. Die Signaturen können elektronisch gespeichert und weiterverarbeitet werden. Bei der Umwandlung der Merkmale in Signale kommt es typischerweise zu einem Informationsverlust durch die Kodierung. Hierbei wird vor allem der Teil der Information verworfen, der für die Charakterisierung der Position entbehrlich ist. Beispielswiese kann die Signatur als Konkatenation von binär codierten Zahlen gebildet werden, die den Vektor für das Merkmal in quantisierter Form darstellt. Vorzugsweise kann die Umwandlung der Merkmale in die Signaturen gewichtet sein, wobei die Gewichtung von einem Anwender oder beispielsweise von einem neuronalen Netzwerk im Sinne eines Trainings vorgenommen werden kann. Alternativ können aus einem Merkmal mehrere Arbeitssignaturen gebildet werden oder eine Signatur aus mehreren Merkmalen gebildet werden oder mehrere Signaturen aus mehreren Merkmalen gebildet werden.

Das virtuelle Schienensystem ist ein Bereich zwischen zumindest einem Startpunkt und zumindest einem Endpunkt, in dem sich das Fahrzeug auf vorgegeben Wegen (virtuelle Schienen) bewegt. Dabei kann sich das Fahrzeug in beide Richtungen auf den vorgegebenen virtuellen Schienen bewegen. Das virtuelle Schienensystem ist als Datensatz der Positionen des Untergrunds, auf dem sich das Fahrzeug bewegen soll, abgespeichert. Diesen Positionen auf dem virtuellen Schienensystem sind Referenzsignaturen zugeordnet. Die Referenzsignaturen bilden demnach eine Karte des virtuellen Schienensystems. Einer Referenzsignatur sind typischerweise mehrere Positionen auf dem virtuellen Schienensystem zugeordnet. Die Position lässt sich dann nicht aus nur einer Referenzsignatur ermitteln, sondern es ist eine Gruppe von Referenzsignaturen nötig, die der gleichen Position oder benachbarten Positionen zugeordnet sind. Die Zuordnung der Referenzsignaturen und der Positionen ist in einer Korrespondenztabelle abgelegt, die als Lookup-Tabelle ausgelegt ist. Den Positionen auf dem Schienensystem sind Adressen innerhalb der Korrespondenztabelle zugeteilt. Die Signatur wird als Zahl betrachtet, die eine Adresse der Korrespondenztabelle angibt, und dient daher zur Feststellung der Adresse in der Korrespondenztabelle. Auf ein Abspeichern der Signatur selbst kann daher verzichtet werden. Wenn nachfolgend in Zusammenhang mit der Korrespondenztabelle von Abspeichern bzw. Löschen von Referenzsignaturen gesprochen wird, so kann diese vereinfachende Formulierung so zu verstehen sein, dass eine der Signatur zugehörige Referenzposition gespeichert bzw. gelöscht wird. Die Signatur muss nicht eindeutig sein, so dass mehrere Positionen auf dem virtuellen Schienensystem dieselbe Signatur aufweisen können und daher auf dieselbe Adresse in der Korrespondenztabelle verweisen können. Daher ist vorteilhafterweise vorgesehen, dass mehrere Positionen pro Referenzsignatur in der Korrespondenztabelle gespeichert werden können. Hierbei gilt es zu beachten, dass die vom virtuellen Schienensystem abgedeckte Fläche, daher dessen Länge und dessen Breite, Einfluss auf die Wahrscheinlichkeit eines solchen Mehrfachauftretens der Signatur in der Korrespondenztabelle hat. Die Korrespondenztabelle ist, wie oben begründet, vorteilhafterweise so angelegt, dass mehrere Positionen pro Tabellenfeld abgelegt werden können. Dabei kann pro Tabellenfeld eine Speicherkapazität fest zugeordnet sein oder es kann der insgesamt verfügbare Speicher flexibel unter den Tabellenfeldern aufgeteilt werden, z. B. mittels dynamischer Listen. Als Resultat können mehr Positionen in einer kleineren Korrespondenztabelle, also mit kleinerem Wertebereich der Adressen bzw. Signaturen, abgelegt werden. Die maximale Anzahl bzw. die mittlere Anzahl von Positionen, die pro Tabellenfeld abgelegt werden können, hängt von der Umwandlung der Merkmale und von der Länge des virtuellen Schienensystems ab, daher auch vom vorgesehenen Einsatzgebiet des Fahrzeugs.

Das virtuelle Schienensystem kann bevorzugt in mehrere Abschnitte unterteilt werden. Vorzugsweise kann dann jedem Abschnitt des virtuellen Schienensystems ein Teil der Korrespondenztabelle zugeordnet sein. Dies kann auch so aufgefasst werden, dass jedem Abschnitt des virtuellen Schienensystems eine eigene Korrespondenztabelle zugeordnet sein kann, wobei dann die verschiedenen Korrespondenztabellen vorteilhafterweise miteinander kompatibel sind, indem sie identische Adressbereiche aufweisen und dieselbe Art der Signaturbildung voraussetzen. Ein elektronisches Steuergerät des Fahrzeugs kann vorteilhafterweise auf den Teil der Korrespondenztabelle, die dem aktuellen Abschnitt des virtuellen Schienensystems zugeordnet ist, auf dem sich das Fahrzeug befindet bzw. bewegt, sowie auf Teile der Korrespondenztabelle, die benachbarten Abschnitten des virtuellen Schienensystems zugeordnet sind, zugreifen. Die nicht benötigten Teile der Korrespondenztabelle können dann ausgelagert werden und z. B. in einem Flash-Speicher oder in einer "Datencloud" gespeichert werden. Als Resultat kann das elektronische Steuergerät mit einem kleineren Arbeitsspeicher auskommen, der nur die eben erwähnten Teile der Korrespondenztabelle vorhalten muss.

Die Referenzsignaturen können in gleicher Weise, wie für die Arbeitssignaturen erläutert, erhalten werden. Mit anderen Worten bilden die Referenzsignaturen eine Karte des virtuellen Schienensystems. Um die Referenzsignaturen zu erhalten, können eine oder mehrere der folgenden Methoden gewählt werden:

Das Fahrzeug kann, bevor es automatisch geführt wird, eine "Anlernfahrt" absolvieren. Bei der Anlernfahrt wird das Fahrzeug durch einen Anwender oder durch ein anderes Fahrzeug, das bereits angelernt ist, gesteuert oder geführt.

Das Fahrzeug bewegt sich entlang der Wege, die später das virtuelle Schienensystem bilden sollen. Während der Anlernfahrt - oder zu einem späteren Zeitpunkt vor dem automatischen Führen - werden aus demSensorsignal, in vorstehend beschriebener Weise, Referenzsignaturen für das virtuelle Schienensystem gebildet. Die somit erhaltenen Referenzsignaturen können dann vorzugsweise in der obengenannten Korrespondenztabelle abgelegt werden, indem die zugeordneten Positionen in der Korrespondenztabelle gespeichert werden. Dadurch kann das Fahrzeug in jeder neuen Umgebung im Anschluss an die Anlernfahrt automatisch geführt werden.

Gemäß einem Aspekt kann die Korrespondenztabelle und somit auch die Referenzsignaturen von zumindest einem Sender übertragen werden. Somit kann das Fahrzeug sofort in einer neuen Umgebung automatisch geführt werden.

Die Übertragung erfolgt kabellos oder kabelgebunden und kann direkt zwischen dem Sender und dem elektronischen Steuergerät des Fahrzeugs erfolgen oder über einen Server geleitet werden, d.h. mit anderen Worten aus einer "Datencloud" abgerufen werden, wobei das elektronische Steuergerät vorzugsweise mit einer Empfangsvorrichtung verbunden ist. Dabei kann die Korrespondenztabelle vollständig oder nur in Teilen übertragen werden, wobei die Teile der Korrespondenztabelle mit den erreichbaren Positionen auf dem Schienensystem korrelieren. Der Sender kann beispielsweise in einem weiteren Fahrzeug integriert sein. Dies bietet sich an, wenn das Fahrzeug dem anderen Fahrzeug folgt, beispielsweise in einer Kolonne von Kraftfahrzeugen oder Lastkraftwagen auf der Straße oder als Transportkolonne für mehrere mobile Transportgeräte. Alternativ kann der Sender fest stationiert sein. In diesem Fall können insbesondere mehrere Funkbaken vorgesehen sein, die jeweils den Teil der Korrespondenztabelle übertragen, der dem Abschnitt des virtuellen Schienensystems zugeordnet ist, auf dem sich das Fahrzeug innerhalb des Senderadius des Senders bewegen kann.

Optional kann der Boden auch mit einer dafür ausgelegten Sensorik, z. B. einem Boden-Scanner, unabhängig vom Fahrzeug im Vorhinein erfasst werden. Die Sensorik ist vorteilhafterweise eingerichtet, größere Abschnitte des virtuellen Schienensystems effizient zu erfassen. Dann können aus den erfassten Sensorsignalen, wie bereits beschrieben, über die Merkmale die Referenzsignaturen ermittelt und in einem zentralen Server gespeichert werden. Schließlich werden die Referenzsignaturen vorzugsweise in Form der Korrespondenztabelle, wie vorstehend erläutert, über eine Funkverbindung an das Fahrzeug übermittelt. In diesem Fall kann die Planung des virtuellen Schienensystems an einem PC-Arbeitsplatz erfolgen und dabei gewünschte Schienenwege, Kurvenradien und/oder Klothoiden festgelegt werden. Insbesondere können hiermit Sicherheitsabstände eingehalten werden. Bei Transportgeräten in Industriehallen können dadurch Kollisionen mit Personen, Objekten, der Infrastruktur und/oder untereinander vermieden werden. Im Straßenverkehr kann durch diese Planung die Einhaltung von Verkehrsregeln sichergestellt werden.

Zur Selbstlokalisation wird geprüft, ob zumindest eine der Arbeitssignaturen, die im aktuellen Betrieb erhalten werden, mit zumindest einer der Referenzsignaturen des virtuellen Schienensystems übereinstimmt. Dies ist insbesondere für den Fall relevant, bei dem der Referenzsignatur genau eine Position zugeordnet ist. Stimmen die zumindest eine Arbeitssignatur und die zumindest eine Referenzsignatur des virtuellen Schienensystems überein, wird auf die Position des Fahrzeugs auf dem virtuellen Schienensystem geschlossen. Wird eine einzige Arbeitssignatur mit einer einzigen Referenzsignatur verglichen, wird nicht nach einer möglichst guten Übereinstimmung gesucht, wie es im Zusammenhang mit Ähnlichkeits- bzw. Distanzmaßen oftmals durchgeführt wird, sondern nach einer perfekten Übereinstimmung der beiden Signaturen, also Identität. Hieraus ergibt sich der Vorteil, dass das Prüfen auf Übereinstimmung mit erheblich geringerem Rechenaufwand durchführbar ist als das Prüfen auf Ähnlichkeit bzw. Unähnlichkeit mit Hilfe von Ähnlichkeits- bzw. Distanzmaßen.

Bei Verwendung der bereits erläuterten Korrespondenztabelle, wird die Arbeitssignatur ebenfalls als Zahl betrachtet, welche die Adresse der Korrespondenztabelle angibt. Da sowohl die Arbeitssignatur als auch die Referenzsignatur des virtuellen Schienensystems die gleiche Adresse angeben und somit auf das gleiche Tabellenfeld zeigen, werden beide als sich entsprechende, identische Signaturen angesehen. Aus dem Tabellenfeld auf das die beiden Signaturen zeigen, wird auf die Position des Fahrzeugs auf dem virtuellen Schienensystem geschlossen.

Die Signatur weist vorzugsweise eine Länge zwischen 8 Bit und 32 Bit auf, wodurch ein Kompromiss zwischen einer zu kurzen Signatur, bei der nur zwischen wenigen Positionen unterschieden werden kann, und einer zu langen Signatur, die zu einer großen Korrespondenztabelle führt, die eine große Speicherkapazität voraussetzt, und nebenbei die Wahrscheinlichkeit eines Fehlers bei der Übereinstimmung erhöht, gefunden wird. Gemäß einem Aspekt können zu kurze Signaturen zusammengefasst werden, indem man Gruppen mit fester geometrischer Anordnung betrachtet, wie z. B. zwei Signaturen gleicher Länge, an zwei zueinander versetzten Positionen. Darüber hinaus gilt zu beachten, dass die Signaturen nicht so lang gewählt werden müssen, dass alle Positionen auf dem virtuellen Schienensystem oder dem aktuellen Abschnitt des virtuellen Schienensystems eindeutig zugeordnet sind, da wie bereits erwähnt, das Mehrfachauftreten von Signaturen erlaubt ist.

Es wird geprüft, ob eine Gruppe von Arbeitssignaturen mit einer Gruppe von Referenzsignaturen übereinstimmen. Dies ist insbesondere für den Fall relevant, bei dem der Referenzsignatur mehrere Positionen zugeordnet sind. Die Übereinstimmungen zwischen den Arbeitssignaturen und den Referenzsignaturen werden gezählt und die Zahl der Übereinstimmungen der jeweiligen Position des Fahrzeugs auf dem virtuellen Schienensystem zugeordnet. Schließlich wird auf die Position des Fahrzeugs auf dem virtuellen Schienensystem geschlossen, deren Zahl der Übereinstimmungen am höchsten ist. Dabei wird die Eigenschaft ausgenutzt, dass anhand der Übereinstimmungen zwischen Arbeitssignaturen und Referenzsignaturen Häufungen für die über die Korrespondenztabelle ermittelte Position auftreten, die einen Rückschluss auf die tatsächliche Position auf dem Schienensystem ermöglichen. Mit anderen Worten stellt jede Übereinstimmung zwischen einer Arbeitssignatur und einer Referenzsignatur ein Votum für die der Referenzsignatur zugeordneten Position bzw. Positionen dar. Dadurch müssen nicht alle Merkmale, die in die Arbeitssignaturen umgewandelt werden, mit den Merkmalen, die in die Referenzsignaturen umgewandelt wurden, übereinstimmen. Als Resultat können einerseits Messunsicherheiten und Ungenauigkeiten ausgeglichen werden. Andererseits können Veränderungen in den Merkmalen selbst, die beispielsweise von Schmutz, Beschädigung, Abrieb und/oder anderen Einflüssen herrühren, ausgeblendet werden.

Gemäß einem Aspekt wird die höchste Zahl der Übereinstimmungen zwischen den Arbeitssignaturen und den Referenzsignaturen aus zumindest einem Histogramm der Übereinstimmungen ermittelt. Jede Übereinstimmung wird einem entsprechenden Histogramm-Bin zugeordnet, wobei den Histogramm-Bins wiederum Positionen auf dem Schienensystem zugeordnet sind. Im Anschluss wird dasjenige Histogramm-Bin gesucht, welches die meisten Übereinstimmungen aufweist und daraus auf die gesuchte Position zurückgeschlossen. Alternativ kann auch eine Gruppe benachbarter Histogramm-Bins ermittelt werden, welche gesamt die meisten Übereinstimmungen aufweisen. Werden mehrere Korrespondenztabellen verwendet oder ist die Korrespondenztabelle in mehrere Teile aufgeteilt, kann für jede Korrespondenztabelle bzw. für jeden Teil der Korrespondenztabelle ein Histogramm wie vorstehend beschrieben erstellt werden und schließlich das Histogramm-Bin ermittelt werden, das über alle Histogramme hinweg, die meisten Übereinstimmungen aufweist. Optional können mehrere Histogramme mit unterschiedlicher örtlicher Auflösung für eine Korrespondenztabelle bzw. für einen Teil der Korrespondenztabelle verwendet werden, wobei, wenn ein Histogramm-Bin für ein Histogramm mit niedriger Auflösung gefunden wurde, im nächsten Schritt ein Histogramm für die zugehörige Fläche/Länge mit höherer Auflösung verwendet wird. Die Histogramme können eindimensional und/oder zweidimensional sein. Beispielsweise ist bei einem Zwei-Schritt-Ansatz ein erstes Histogramm eindimensional und weist eine Auflösung von 1m pro Histogramm-Bin auf und ein zweites Histogramm ist zweidimensional und weist eine Auflösung von 1 cm x 1 cm pro Histogramm-Bin auf. Dies bietet die Vorteile, dass einerseits die verwendeten Histogramme wenig Speicherkapazität beanspruchen und andererseits der maximale Wert einfacher gefunden werden kann.

Wurde die Position des Fahrzeugs auf dem Schienensystem ermittelt, können folgende Schritte ausgeführt werden: Wird eine Positionsverfolgung ausgeführt, bei der bei bekannter Anfangsposition die jeweils nächste Position ermittelt wird - auch "Tracking" genannt -, können die Referenzsignaturen für den Verglich bei der Ermittlung der nächsten Position auf diejenigen Referenzsignaturen eingeschränkt werden, die sich innerhalb des Suchfelds befinden, welches sich aus einem Suchbereich um die ermittelte Position oder um einen Suchbereich um die nächste Position ergibt. Durch die Einschränkung der Referenzsignaturen auf diejenigen, die sich innerhalb des Suchfelds befinden, kann der Rechenaufwand und/oder die Speicherkapazität reduziert werden, da nicht das komplette virtuelle Schienensystem berücksichtigt werden muss.

Des Weiteren können für den Fall, dass die Position des Fahrzeugs auf dem Schienensystem ermittelt wurde, die Referenzsignaturen zumindest teilweise mit Hilfe der Arbeitssignaturen aktualisiert werden. Dadurch können Referenzsignaturen von Merkmalen, die beispielsweise durch Alterung, Abnutzung, Verschmutzung, Reifenabrieb, Flickstellen etc. verändert wurden, angepasst werden. Diese Aktualisierung erfolgt bevorzugt bereits dann, wenn noch eine Mehrzahl der anderen Referenzsignaturen auf eine Position weisen. Besonders bevorzugt erfolgt die Aktualisierung permanent während des Betriebs. Vorteilhafterweise werden die Referenzsignaturen bei der Aktualisierung nicht ersetzt, sondern mehrfach hinterlegt. Dadurch können unterschiedliche kurzfristige Zustände, wie z. B. ein trockener Zustand und ein nasser Zustand des Untergrunds, berücksichtigt werden. Um jedoch Referenzsignaturen, die tatsächlich durch obengenannte Effekte veraltet sind, zu löschen und damit den Speicher zu leeren, kann eine Zusatzinformation zu jeder Referenzsignatur vorgesehen sein, die geeignet ist, um veraltete Referenzsignaturen zu detektieren. Beispielsweise kann als Zusatzinformation ein Zähler pro in der Korrespondenztabelle gespeicherter Position vorgesehen sein, der erhöht wird, wenn an der ermittelten Position die Arbeitssignatur mit der Referenzsignatur übereinstimmt und die ermittelte Position mit der gespeicherten Position hinreichend genau übereinstimmt. Schließlich können in einem Aufräumvorgang diejenigen den Referenzsignaturen zugeordneten Positionen gelöscht werden, deren Zähler unterhalb einer Schwelle liegt. Bei den übrigen zugeordneten Positionen können die Zähler zurückgesetzt werden. Auf diese oder ähnliche Weise können auch mehrere Referenzsignaturen, die auf die gleiche Position weisen, reduziert oder zusammengefasst werden. Die Zähler können in der Korrespondenztabelle gespeichert werden. Dabei kann jeder in der Korrespondenztabelle gespeicherten Position ein Zähler zugeordnet sein.

Gemäß einem Aspekt ist vorgesehen, dass, abhängig von der Position des Fahrzeugs auf dem virtuellen Schienensystem, Steuersignale für das Fahrzeug bereitgestellt werden, mit denen die Bewegung des Fahrzeugs gesteuert wird. Mit den Steuersignalen können unter anderem der Antrieb und/oder die Lenkung des Fahrzeugs gesteuert werden. Dadurch ist es möglich, das Fahrzeug so zu bewegen, dass es auf dem virtuellen Schienensystem geführt wird. Vorzugsweise sind Steuersignale für eine Querrichtung zum virtuellen Schienensystem vorgesehen, welche eine Lenkung des Fahrzeugs steuern, und Steuersignale für eine Längsrichtung zum virtuellen Schienensystem vorgesehen, welche den Antrieb des Fahrzeugs steuern.

Optional können Zusatzmerkmale in der Korrespondenztabelle abgespeichert werden. Zu diesen Zusatzmerkmalen gehören unter anderem:

- Informationen über einen Kurvenradius, durch den zum einen eine Geschwindigkeit in der Kurve angepasst wird und zum anderen die Lenkung vorgesteuert wird;
- empfohlene Geschwindigkeit und/oder Geschwindigkeitsbegrenzung;
- Informationen zum Umschalten zwischen Korrespondenztabellen oder Teilen der Korrespondenztabellen;
- Wahl der Richtung bei einer Abzweigung;
- Steuerung von Funktionen;
- Informationen über das Ablegen der Referenzsignaturen bzw. der ihnen zugeordneten Positionen, wie z. B. Datum/Uhrzeit, trockener oder nasser Zustand, (Tages-)Licht oder Dunkelheit, weitere Umweltbedingungen.

Das Computerprogramm ist eingerichtet, jeden Schritt des Verfahrens durchzuführen, insbesondere, wenn es auf einem Rechengerät oder Steuergerät durchgeführt wird. Es ermöglicht die Implementierung des Verfahrens in einem herkömmlichen elektronischen Steuergerät, ohne hieran bauliche Veränderungen vornehmen zu müssen. Hierzu ist es auf dem maschinenlesbaren Speichermedium gespeichert.

Durch Aufspielen des Computerprogramms auf ein herkömmliches elektronisches Steuergerät, wird das elektronische Steuergerät erhalten, welches eingerichtet ist, das Fahrzeug entlang des virtuellen Schienensystems automatisch zu führen. Alternativ kann ein FPGA (Field Programmable Gate Array) oder eine ASIC (anwendungsspezifische integrierte Schaltung) eingerichtet sein, um das Verfahren zur automatischen Führung des Fahrzeugs entlang des virtuellen Schienensystems auszuführen.

Des Weiteren wird ein Fahrzeug vorgeschlagen, das eine Bilderfassungsvorrichtung zum Erkennen von Merkmalen des Untergrunds aufweist und das eingerichtet ist, mit dem vorstehend erläuterten Verfahren entlang des virtuellen Schienensystems automatisch geführt zu werden. Hierfür kann das Fahrzeug das vorstehend beschriebene elektronische Steuergerät aufweisen. Die Bilderfassungseinheit kann beispielsweise eine Kamera oder ein Kamerasystem umfassen, die/das ein Bild vom Untergrund aufnimmt, und die Bilderfassungsvorrichtung kann aus diesem Bild die Merkmale des Untergrunds erkennen.

Vorzugsweise weist das Fahrzeug eine Beleuchtungsvorrichtung auf, die der Bilderfassungsvorrichtung zugeordnet ist und den Bereich des Untergrunds, der von der Bilderfassungsvorrichtung erfasst wird, beleuchtet. Dabei kann die Beleuchtungsvorrichtung mehrere Lichtquellen mit unterschiedlichen Farben aufweisen. Bevorzugt wird der Untergrund dann mit unterschiedlichen Farben aus unterschiedlichen Richtungen beleuchtet, sodass die Merkmale besser erkannt werden können. Vorzugsweise kann die Beleuchtungsvorrichtung gepulst betrieben werden, um Bewegungsunschärfe im Bild zu vermeiden. Dabei können die Pulsdauer der Beleuchtungsvorrichtung und die Aufnahmedauer der Bilderfassungsvorrichtung synchronisiert werden.

Gemäß einem Aspekt kann das Fahrzeug einen Richtungssensor aufweisen, mittels dem die Referenzsignale und die Arbeitssignale ausgerichtet werden können. Dies führt zu Vorteilen bei der Selbstlokalisation in Bezug auf die Übereinstimmung der Arbeitssignaturen und der Referenzsignaturen. Des Weiteren kann im Zusammenhang mit sich kreuzenden virtuellen Schienen diejenige, die zur Weiterfahrt in die gewünschte Richtung geeignet ist, ausgewählt werden.

Gemäß einem weiteren Aspekt kann der Richtungssensor dazu genutzt werden, die Beleuchtungsvorrichtung so anzusteuern, dass die Beleuchtung oder die Beleuchtungsfarbe die beleuchtete Fläche aus einer vorbestimmten Richtung anstrahlt, und zwar unabhängig davon, welche Orientierung das Fahrzeug gerade bezüglich seiner Umgebung aufweist.

Das virtuelle Schienensystem kann neben zumindest einer virtuellen Schiene unterschiedliche virtuelle Komponenten aufweisen, wie z. B. Abzweigungen, Weichen, Kreuzungen, T-Stücke, Abstellpositionen, Ausweichpositionen usw. Dadurch wird das Fahrzeug auf dem virtuellen Schienensystem ähnlich wie bei einem realen Schienensystem, z. B. für Züge, geführt.

Das virtuelle Schienensystem ist an sich zumindest für Menschen nicht sichtbar bzw. von der Umgebung unterscheidbar. Es kann vorgesehen sein, dass sichtbare Markierungen an den realen Orten des virtuellen Schienensystems angebracht werden. Durch die sichtbaren Markierungen wird Menschen verdeutlicht, dass in diesem Bereich ein virtuelles Schienensystem vorhanden ist und dementsprechend mit selbstfahrenden Fahrzeugen zu rechnen ist. Im Falle von selbstfahrenden Kraftfahrzeugen kann dies signalisieren, dass der Fahrer auf automatisiertes Fahren umstellen kann. Es gibt viele Möglichkeiten, solche sichtbaren Markierungen zu realisieren. Als Beispiele sollen das Anbringen von Farbpunkten, ein Einstreuen von Farbchips, Streifen mit anderem Muster oder anderer Farbe, insbesondere bei Teppichböden, neben vielen weiteren Möglichkeiten genannt werden.

Gleichzeitig kann durch das Anbringen solcher sichtbaren Markierungen auch die Bildung von geeigneten Signaturen unterstützt werden, beispielsweise wenn auf einen an sich texturlosen oder texturarmen Boden dort Farbstreifen mit eingestreuten Farbchips aufgebracht werden, wo das virtuelle Schienensystem eingesetzt werden soll.

Kurze Beschreibung der Zeichnungen

Ausführungsbeispiele der Erfindung sind in den Zeichnungen dargestellt und in der nachfolgenden Beschreibung näher erläutert.

Figur 1 zeigt eine Querschnittsansicht eines Fahrzeugs gemäß einem Ausführungsbeispiel der Erfindung.

Figur 2 zeigt eine Schrägansicht eines Fahrzeugs gemäß einem weiteren Ausführungsbeispiel der Erfindung.

Figur 3 zeigt eine Draufsicht auf das Fahrzeug gemäß Figur 1 auf einer virtuellen Schiene.

Figur 4 zeigt eine schematische Darstellung von aufgenommenen Sensorsignal-Messpunkten, eine Merkmalsbildung und Arbeitssignaturen gemäß einer Ausführungsform der Erfindung.

Figur 5 zeigt eine schematische Darstellung des virtuellen Schienensystems, mehrere Erfassungsbereiche und eine gemeinsame Merkmalsbildung gemäß einer Ausführungsform der Erfindung.

Figur 6 zeigt eine Korrespondenztabelle gemäß einer Ausführungsform der Erfindung.

Figur 7 zeigt eine schematische Darstellung von Arbeitssignaturen und Referenzsignaturen und Übereinstimmungen der beiden gemäß einer Ausführungsform der Erfindung.

Ausführungsbeispiele der Erfindung

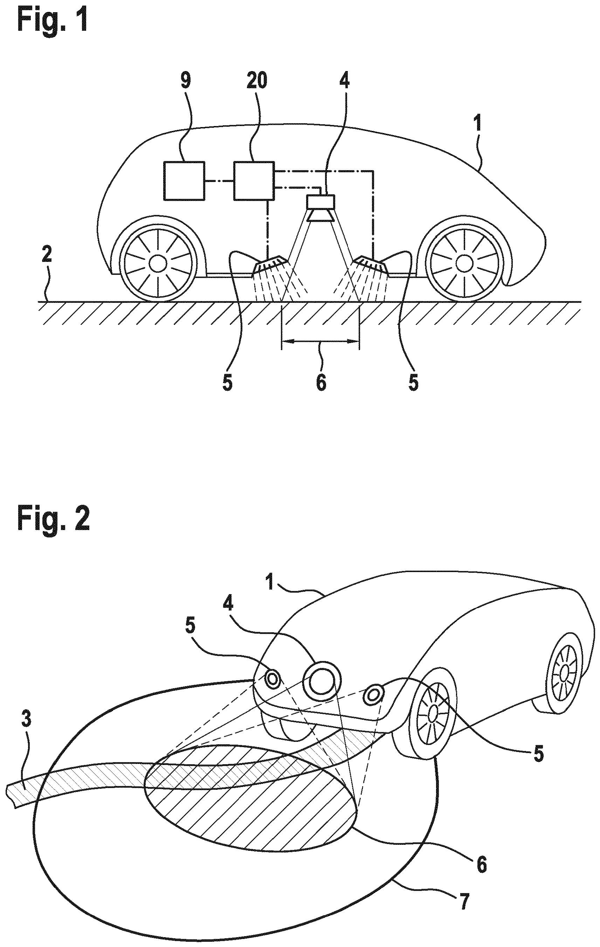

In den Figuren 1 bis 3 sind unterschiedliche Ansichten von Fahrzeugen 1 gemäß zweier Ausführungsformen der Erfindung dargestellt. Das Fahrzeug 1 bewegt sich auf einem Untergrund 2 entlang einem virtuellen Schienensystem 3 (in Figur 1 nicht gezeigt). Die Fahrzeuge 1 weisen jeweils eine Bilderfassungsvorrichtung 4 und eine Beleuchtungsvorrichtung 5 auf, die mit einem elektronischen Steuergerät 20 verbunden sind. Die Bilderfassungsvorrichtung 4 kann einen oder mehrere der folgenden Sensoren umfassen:

- ein monokularer Bildsensor;
- ein eindimensionaler Zeilensensor, der quer zur Bewegungsrichtung des Fahrzeugs 1 angeordnet ist bzw. eine Erfassung quer zur Bewegungsrichtung vornimmt; die zweite Dimension wird durch die Bewegung des Fahrzeugs 1 erhalten;
- ein konventioneller Bildsensor, der ein zweidimensionales Sensorsignal liefert, entweder in Graustufen oder als Farbbild; dieser wird idealerweise mit kurzer Belichtungszeit und kleiner Blendenzahl (das heißt eine große Blendenöffnung) betrieben, damit gleichzeitig eine geringe Bewegungsunschärfe während der Fahrt und eine ausreichende Lichtausbeute erreicht werden;
- ein Entfernung messender Sensor, z.B. basierend auf Ultraschall, Radar oder Lichtlaufzeitmessung oder eine Stereokamera oder eine strukturierte Beleuchtung mit Kamera
- ein Orientierung messender Sensor, z. B. basierend auf einer monokularen Kamera und einer mehrfarbigen Beleuchtung, durch welche die Oberflächenorientierung festgestellt werden kann und z.B. als Bild von Normalenvektoren bereitgestellt werden kann.

Die Bilderfassungsvorrichtung 4 bzw. die Sensoren weisen einen Erfassungsbereich 6 für Merkmale (nicht näher dargestellt) eines Untergrunds 2 auf. Für die Anordnung der Bilderfassungsvorrichtung 4 bzw. des Sensors existieren verschiedene Möglichkeiten. Bei einem drei- oder vier-rädrigen Fahrzeug 1 mit Achsschenkellenkung ist die Bilderfassungsvorrichtung 4 an der nicht gelenkten Achse mittig angeordnet. Bei Allradlenkung, Panzerlenkung oder Knicklenkung ist die Bilderfassungsvorrichtung 4 nahe der Mitte des Fahrzeugs 1 angeordnet. Dadurch wird bei einem Lenkmanöver ein möglichst geringer Versatz des Erfassungsbereichs 6 bezüglich der virtuellen Schiene erreicht.

In Figur 1 ist eine Ausführungsform der Erfindung gezeigt, in der die Bilderfassungsvorrichtung 4 unterhalb des Fahrzeugs 1 angeordnet ist. Dabei ist die Bilderfassungsvorrichtung 4 in Richtung des Inneren des Fahrzeugs 1 versetzt, um einerseits einen größeren Erfassungsbereich 6 zu erreichen und andererseits die Bilderfassungsvorrichtung 4 vor Schmutz, Abrieb usw. zu schützen. Des Weiteren haben ein unterschiedlicher Sonnenstand und/oder Regen keinen direkten Einfluss auf die Bilderfassung bzw. die Bilderfassungsvorrichtung 4. Die Beleuchtungsvorrichtung 5 ist ringförmig um die Bilderfassungsvorrichtung 4 herum angeordnet und beleuchtet zumindest den Erfassungsbereich 6. Zudem umfasst das Fahrzeug 1 einen Richtungssensor 9, der ebenfalls mit dem elektronischen Steuergerät 20 verbunden ist, mit der die Orientierung des Fahrzeugs 1 bezüglich des Untergrunds 2 ermittelt werden kann. Die Beleuchtungsrichtung der Beleuchtungsvorrichtung 5 wird in Abhängigkeit der vom Richtungssensor 9 ermittelten Orientierung des Fahrzeugs 1 gesteuert.

In Figur 2 ist eine weitere Ausführungsform der Erfindung gezeigt, bei der die Bilderfassungsvorrichtung 4 an der Vorderseite des Fahrzeugs 1 in Fahrtrichtung angeordnet ist. Die Bilderfassungsvorrichtung 4 kann hierbei zusätzlich für eine Kollisionsvermeidung eingesetzt werden, wobei der Erfassungsbereich 7 für die Kollisionsvermeidung größer ausgelegt ist, als der Erfassungsbereich 6 für die Merkmale des Untergrunds 2. Die Beleuchtungsvorrichtung 5 ist ebenfalls an der Vorderseite des Fahrzeugs 1 angeordnet und beleuchtet zumindest den Erfassungsbereich 6 für die Merkmale.

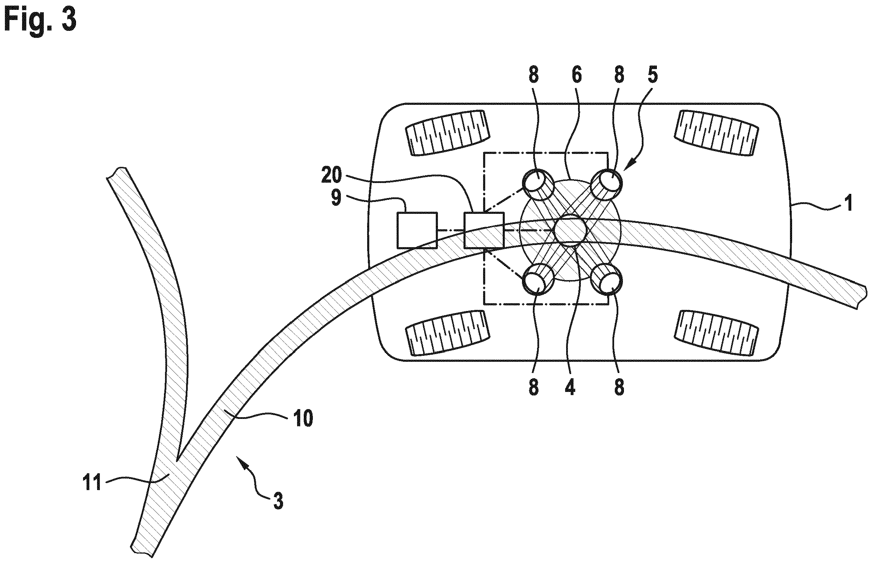

Figur 3 zeigt eine Draufsicht des Fahrzeugs aus Figur 1 auf dem virtuellen Schienensystem 3, bei der die Bilderfassungsvorrichtung 4 mittig unterhalb des Fahrzeugs 1 angeordnet ist. Die Beleuchtungsvorrichtung 5 umfasst mehrere Leuchtmodule 8, die aus unterschiedlichen Richtungen Licht mit verschiedener Farbe (hier vier unterschiedliche Farben) aussenden. Damit lassen sich auch in schwach texturierten, aber strukturierten Oberflächen Merkmale unterscheiden. Die Beleuchtungsvorrichtung 5 ist drehbar ausgeführt, entweder mechanisch drehbar oder elektronisch drehbar durch Nutzung von mehrfarbigen Leuchtmodulen 8. Durch die Nutzung des Richtungssensors 9 zur Steuerung der Drehung der Beleuchtungsvorrichtung 5 wird sichergestellt, dass die Beleuchtungsrichtung für die jeweilige Farbe unabhängig ist von der aktuellen Orientierung des Fahrzeugs bezüglich seiner Umgebung oder bezüglich der Orientierung des virtuellen Schienensystems 3 an der Position des Fahrzeugs 1.

Des Weiteren kann die Beleuchtungsvorrichtung 5 gepulst betrieben werden, um Bewegungsunschärfe im Bild zu vermeiden. Dabei sind die Pulsdauer der Beleuchtungsvorrichtung 5 und die Aufnahmedauer der Bilderfassungsvorrichtung 4 synchronisiert. Ebenfalls in Figur 3 ist dargestellt, dass das virtuelle Schienensystem 3 neben zumindest einer virtuellen Schiene 10 eine Weiche 11 aufweist. Ebenso sind hier nicht näher gezeigte Abzweigungen, Kreuzungen, T-Stücke, Abstellpositionen, Ausweichpositionen usw. möglich. Das virtuelle Schienensystem 3 kann für den Menschen sichtbar gemacht werden, indem der Untergrund 2 mittels unterschiedlicher Farben und/oder Formen gekennzeichnet wird.

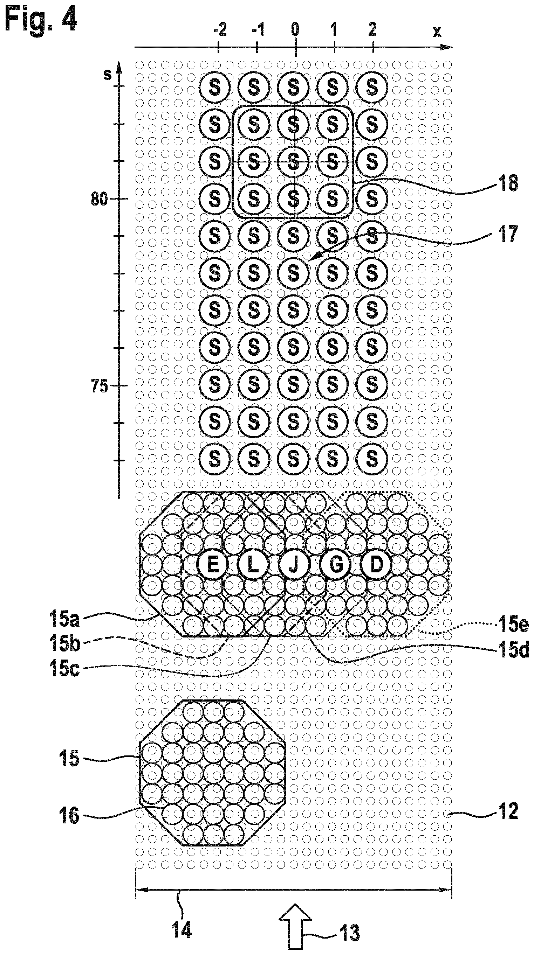

In Figur 4 ist dargestellt, wie aus einem zweidimensionalen Sensorsignal der Bilderfassungsvorrichtung 4 Merkmale gewonnen werden und Signaturen gebildet werden. Signal-Messpunkte 11 repräsentieren die von der Bilderfassungsvorrichtung 4 erfassten Messwerte, das heißt z. B. Grauwerte, Abstandswerte oder Höhenwert, oder Messvektoren, das heißt z. B. Farbvektoren oder Normalenvektoren, oder eine Kombination zwischen Messwerten und/Messvektoren. Die Signal-Messpunkte 11 bilden einen in Figur 4 gezeigten Streifen, der einen Ausschnitt des virtuellen Schienensystems 3 darstellt. Das hier nicht dargestellte Fahrzeug 1 soll sich entlang des Pfeils 13 von unten nach oben bewegen. Auch wenn die nachfolgend erläuterten Schritte an jeder Position des Fahrzeugs 1 durchgeführt werden, sind diese getrennt voneinander einzeln dargestellt. Um der Abfolge der Schritte folgen zu können, soll die Figur 4 von unten nach oben gelesen werden. Die Signal-Messpunkte 11 werden in der Regel nicht zeitgleich aufgenommen, sondern zeitlich fortlaufend mit der Bewegung des Fahrzeugs 1. Der horizontale Abstand und der vertikale Abstand der Signal-Messpunkte 11 untereinander sind in diesem Ausführungsbeispiel als ungefähr gleich dargestellt, sie können aber in anderen Ausführungsbeispielen auch unterschiedlich sein. Die Breite einer von der Bilderfassungsvorrichtung 3 erfassten Spur 14 kann von der Breite des Fahrzeugs 1 bzw. von der Breite der Bilderfassungsvorrichtung 3 oder der Ausdehnung des Erfassungsbereichs 6 für die Merkmale limitiert sein. In der Figur 4 umfasst die Spur 14 in diesem Ausführungsbeispiel 25 Signal-Messpunkte 11. In der Praxis ist die Zahl der Signal-Messpunkte 11 deutlich höher. Bevorzugt entspricht ein Signal-Messpunkt 11 einem Bildpunkt (Pixel).

In diesem Ausführungsbeispiel ist eine Schablone 15 gezeigt, innerhalb der aus den Signal-Messpunkten 11 Merkmale gewonnen werden. Die Schablone 15 erstreckt sich über eine zweidimensionale Fläche, die eine Vielzahl von Signal-Messpunkten 11 umfasst. Diese Schablone 15 muss nicht die gesamte Breite der Spur 14 abdecken. In diesem Ausführungsbeispiel deckt sie knapp die Hälfte der Spur 14 ab, könnte in anderen Ausführungsbeispielen auch mehr oder weniger abdecken. Die Schablone 15 hat hier eine etwa achteckige Form, aber auch andere Formen sind möglich, wie z. B. Kreis, Ellipse, Oval, Quadrat, Rechteck, Polygon oder Linie. Innerhalb der Schablone 15 ist eine Anzahl von Unterschablonen 16 vorgesehen, die hier als 37 Kreise dargestellt sind. Auch hier sind andere Formen und/oder andere Anzahlen möglich. Diese Unterschablonen 16 sind hier nichtüberlappend in der Schablone 15 angeordnet und füllen diese weitgehend aus. In anderen Ausführungsbeispielen sind die Unterschablonen 16 überlappend angeordnet. Für jede Unterschablone 16 wird aus den Werten und/oder den Vektoren der Signal-Messpunkte 11, die zumindest teilweise von der jeweiligen Unterschablone 15 abgedeckt werden oder sich in deren Umfeld befinden, ein Unterschablonen-Messwert oder -vektor gebildet. Beispielsweise wird eine gewichtete Mittelung über die Werte und/oder die Vektoren von den vier nächsten Signal-Messpunkten 11 gebildet, wobei die Gewichte z.B. in Abhängigkeit vom Abstand zwischen Signal-Messpunkte 11 und dem Zentrum der Unterschablone 16 gewählt werden und die Summe der Gewichte 1 ist. Dieser Schritt kann auch als Interpolationsschritt aufgefasst werden.

Es ist auch ein ungültiger Wert/Vektor für die Unterschablone 16 vorgesehen, der bei defekter Bilderfassungseinheit 4, insbesondere bei defekten Pixeln oder nicht-plausiblem Sensorsignal eingesetzt wird oder dort, wo ein Messwert/-vektor fehlt, weil die Schablone 15 aus der Spur 14 hinausragt. Für diesen ungültigen Wert/Vektor wird das Gewicht zu Null gewählt, damit der ungültige Wert nicht berücksichtigt wird.

Sobald für die Schablone 15 die Unterschablonen-Messwerte bzw.-vektoren zur Verfügung stehen, wird eine Vorverarbeitung der Unterschablonen-Messwerte/- vektoren durchgeführt, z.B. eine Normierung oder ein "Ausbalancieren" der Daten. Diese Vorverarbeitung dient dazu, das Bild geometrisch zu entzerren (z. B. mit einer Homographie-Abbildung), so dass es anschließend einer frontparallelen projektiven Abbildung des Untergrunds 2 entspricht. Dadurch wird eine gegebenenfalls vorhandene Schiefstellung des Fahrzeugs bezüglich des Untergrunds 2 ausgeglichen. Falls der Abstand der Bilderfassungseinheit 4 zum Untergrund 2 veränderlich ist und eine nicht telezentrische Optik verwendet wird, kann es von Vorteil sein, das Bild von Signal-Messpunkten 11 oder die Schablone 16 entsprechend zu skalieren, um den Abstandsunterschied auszugleichen und somit sicherzustellen, dass die gebildeten Signaturen nicht vom Abstand abhängen. Dabei kann zur Ermittlung des Abstands jede Art der Höhenstandssensorik verwendet werden.

Anschließend wird aus den vorverarbeiteten Unterschablonen-Messwerten/- Vektoren ein Merkmal gebildet, das charakteristisch für die Position sein soll. Dieses Merkmal kann beispielsweise ein Vektor von Zahlen sein, wobei jede Zahl ein Untermerkmal darstellt, das z. B. Ergebnis einer Faltung oder Filterung eines Signalausschnitts mit einem Wavelet ist. Dabei werden insbesondere unterschiedliche Wavelets verwendet und der Ausschnitt z. B. in seiner Größe variiert. Nachfolgend sind zwei Beispiele aus einer Vielzahl von Möglichkeiten für die dem Fachmann prinzipiell bekannte Bildung von solchen Untermerkmalen dargestellt:

- Eine Faltung des Bildausschnitts von Grauwerten mit einem Wavelet, das eine geglättete zweite Ableitung in eine vorbestimmte Richtung (abhängig vom Richtungssensor 9 oder unabhängig davon mit festem Bezug zum Fahrzeugkoordinatensystem) durchführt.
- Eine Faltung eines ersten Farbkanals mit einem ersten Wavelet, das eine geglättete erste Ableitung in eine erste vorbestimmte Richtung durchführt und eine Faltung eines zweiten Farbkanals mit einem zweiten Wavelet, das eine geglättete erste Ableitung in eine zweite vorbestimmte Richtung durchführt und schließlich eine Differenzbildung der Ergebnisse der beiden Faltungen.

Die Bildung der Merkmale ist (abgesehen von der Vorverarbeitung) ortsinvariant, d. h. sie kann an jeder Position auf gleiche Weise durchgeführt werden.

Es sind 5 überlappende Schablonen 15 a-e gezeigt, aus deren zugehörigen Merkmalen schließlich Signaturen E, L, J, G oder D gebildet werden. Zum Beispiel kann dies eine 16 Bit breite Signatur E, L, J, G oder D sein, wobei die 16 Binärwerte einzeln berechnet werden können, z.B. durch 16 unterschiedliche, gewichtete Verknüpfungen der 37 Unterschablonen-Werte/-Vektoren, jeweils gefolgt von einer Schwellwertentscheidung. Dadurch sind $2^{16}$ Möglichkeiten gegeben, unterschiedliche Positionen über die Signaturen auszudrücken. Die Festlegung der gewichteten Verknüpfungen und der zugehörigen Schwellwerte wird z.B. von einem Anwender oder von einem neuronalen Netzwerk anhand von Trainingsdaten vorgenommen und kann auch während des Betriebs automatisch angepasst werden, um sich an unterschiedliche Untergründe 2 zu adaptieren. Es können auch aus einem Merkmal mehrere Signaturen E, L, J, G oder D gebildet werden oder eine Signatur E, L, J, G oder D aus mehreren Merkmalen gebildet werden oder mehrere Signaturen E, L, J, G oder D aus mehreren Merkmalen gebildet werden.

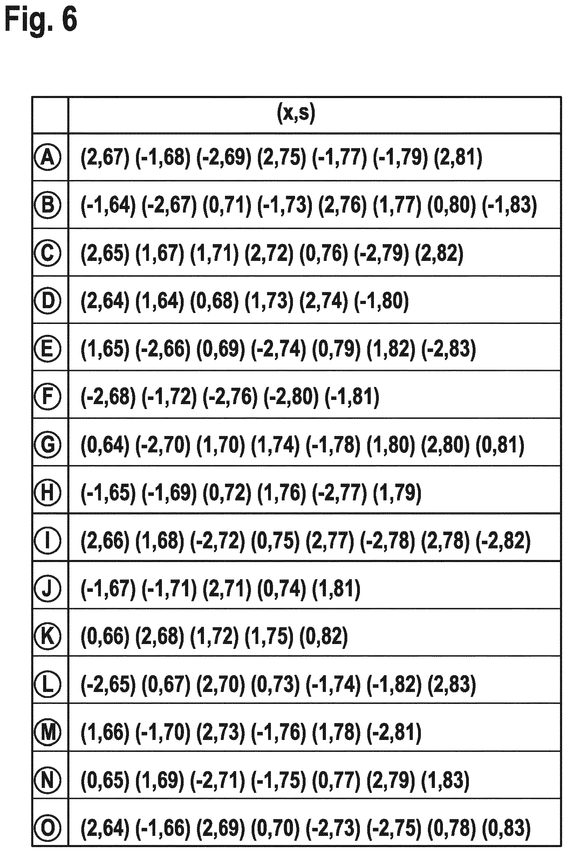

Jede Signatur E, L, J, G oder D ist einer Position zugeordnet, z.B. dem Zentrum der Schablone 15a-e, aus der die Signatur gebildet wurde. Da hier parallel 5 Schablonen 15a-e ausgewertet werden, entstehen als Ergebnis 5 Signaturen E, L, J, G und D, die 5 benachbarten Positionen zugeordnet sind. Die Position kann mit Koordinaten beschrieben werden, einer Koordinate x quer zum virtuellen Schienensystem 3, die positive und negative Vorzeichen hat und bei der der Wert Null der Mitte des virtuellen Schienensystems 3 entspricht, sowie einer Koordinate s, die längs des virtuellen Schienensystems 3 verläuft und am Anfangspunkt bei null beginnt. Hier gilt es zu beachten, dass das virtuelle Schienensystem 3 gekrümmt sein kann. Die Skalierungen der beiden Koordinaten x und s können dabei unterschiedlich sein und metrisch oder in Abhängigkeit der Bilderfassungsvorrichtung 4 (z. B. Pixel) gebildet werden. Dieses Bilden der Signaturen E, L, J, G und D wird immer wieder neu durchgeführt, nachdem sich das Fahrzeug 1 ein Stück weiterbewegt hat. Es entsteht somit ein Streifen 17 von aufgrund des zufälligen Untergrunds im Allgemeinen unterschiedlichen Signaturen, die hier nur mit S bezeichnet sind. Der Bereich 18 schließt Signaturen ein, die gemeinsam betrachtet werden, um eine Position zu ermitteln. In der Figur 6 wird auf diese unterschiedlichen Signaturen detaillierter eingegangen.

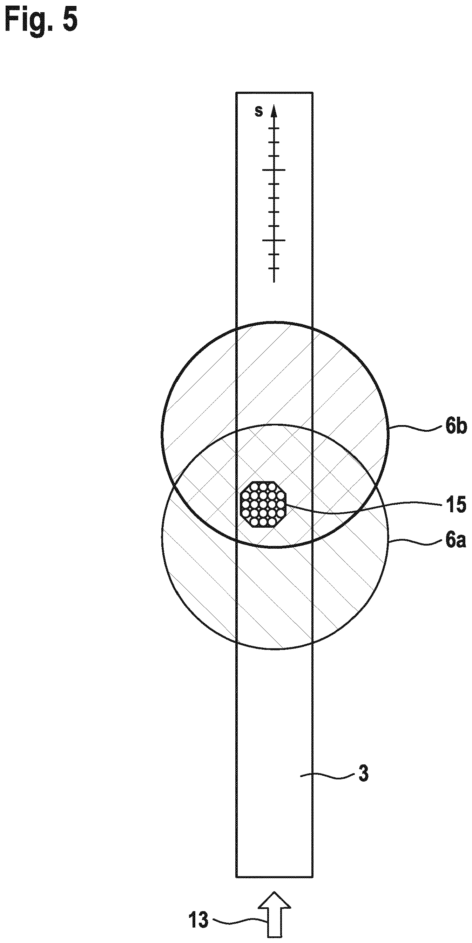

In Figur 5 ist dargestellt, dass, wenn die Merkmale bei hintereinander ablaufenden Messungen, die hier durch zwei Erfassungsbereiche 6a und 6b gekennzeichnet sind, wobei 6a einer ersten Messung und 6b einer zweiten Messung zugeordnet ist, erfasst werden, sich die Schablone 15 im Überlappungsbereich der beiden Erfassungsbereiche 6a und 6b befindet. Dementsprechend werden die Signal-Messpunkte 11 aus beiden Messungen zur Bildung der Merkmale herangezogen. Die daraus gebildeten Signaturen weisen dann eine Redundanz auf, die sinnvoll sein kann, wenn sich die Merkmale je nach Position des Fahrzeugs 1 verändern (auch wenn eigentlich davon ausgegangen wird, dass dies nicht der Fall ist).

In Figur 6 ist eine Korrespondenztabelle gezeigt. Referenzsignaturen A - O, die wie in Zusammenhang mit Figur 4 beschrieben während einer Anlernfahrt des Fahrzeugs 1 erstellt wurden, sind entsprechende Positionen zugewiesen. Diese Zuordnung zwischen der Referenzsignatur A - O und der Position wird in die Korrespondenztabelle eingetragen. Bei der Zuordnung der Koordinatenwerte (x, s) zur Referenzsignatur A - O führt die gleiche Position bei der Bildung der Signatur A - O auch zur gleichen Ortsangabe (x, s). Hierzu kann es notwendig sein, die Koordinate im 2-dimensionalen Sensorsignal - z.B. die Bildkoordinate des Mittelpunkts der Schablone 15 - zu berücksichtigen. Jede so gebildete Position (x, s) entspricht einer Position auf dem virtuellen Schienensystem. Hierbei dient die Signatur lediglich zur einmaligen Bestimmung der Adresse in der Korrespondenztabelle. An dieser Adresse wird die Position gespeichert. Die Signatur selbst wird also nicht abgespeichert. Die Signaturen können mehrfach auftreten, wobei die Wahrscheinlichkeit, dass eine Signatur mehrfach auftritt, mit der (in der Korrespondenztabelle) gespeicherten Strecke und mit der Breite des Streifens 17 steigt. In der Korrespondenztabelle werden mehrere Positionen pro Tabellenfeld abgelegt. Dabei kann pro Tabellenfeld eine Menge an Speicher fest zugeordnet sein oder in anderen Ausführungsbeispielen der verfügbare Speicher flexibel unter den Tabellenfeldern verteilt werden - z. B. mittels dynamischer Listen.

In der Korrespondenztabelle können hier nicht gezeigte Zusatzmerkmale abgespeichert werden. Zu diesen Zusatzmerkmalen gehören unter anderem:

- Informationen über einen Kurvenradius, durch den zum einen eine Geschwindigkeit in der Kurve angepasst wird und zum anderen die Lenkung vorgesteuert wird;
- empfohlene Geschwindigkeit und/oder Geschwindigkeitsbegrenzung;
- Informationen zum Umschalten zwischen Korrespondenztabellen oder Teilen der Korrespondenztabellen;
- Wahl der Richtung bei einer Abzweigung;
- Steuerung von Funktionen;
- Informationen über das Ablegen der Referenzsignaturen A - O, wie z. B. Datum/Uhrzeit, trockener oder nasser Zustand, (Tages-)Licht oder Dunkelheit, weitere Umweltbedingungen.

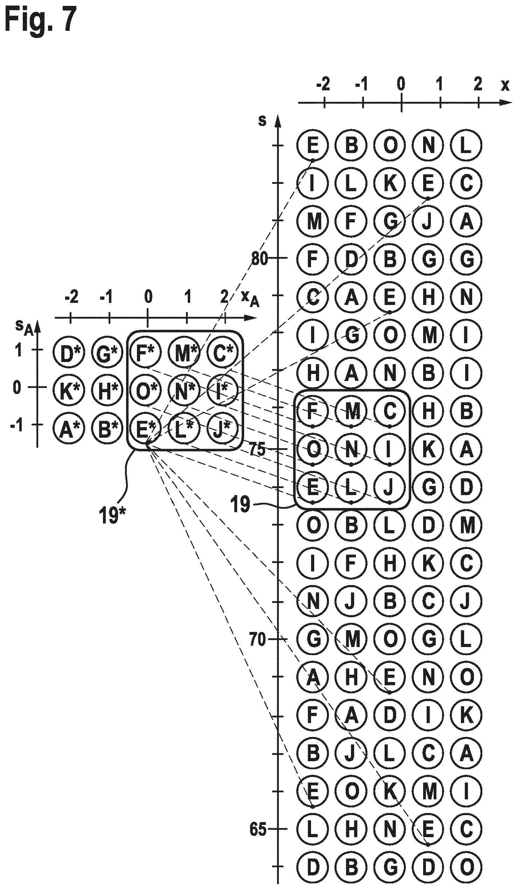

Die Figur 7 veranschaulicht das Vorgehen bei der Lokalisation gemäß eines Ausführungsbeispiels des erfindungsgemäßen Verfahrens anhand einer schematischen Darstellung. Die Referenzsignaturen A - O sind bereits durch die Anlernfahrt ermittelt worden und in der in Figur 6 gezeigten Korrespondenztabelle mit den zugehörigen Positionen abgelegt worden. Die Referenzsignaturen sind in Figur 7 auf der rechten Seite an ihren jeweiligen Positionen dargestellt, wobei diese sich auf das Referenzkoordinatensystem (x,s) beziehen.

Die Bezugszeichen A-O stellen hier insgesamt 15 unterschiedliche Signaturen dar. In dem Beispiel wurden 100 Referenzsignaturen erfasst, in der Praxis werden im Allgemeinen deutlich mehr Referenzsignaturen erfasst. Da die Anzahl der unterschiedlichen Referenzsignaturen A-O die Mächtigkeit der Menge möglicher Signaturen überschreitet, tritt eine bestimmte Referenzsignatur A-O im Allgemeinen mehrfach auf.

Auf der linken Seite sind Arbeitssignaturen A\*-O\* dargestellt, die aktuell aus von der Bilderfassungsvorrichtung 4 des Fahrzeugs 1 aufgenommenen Merkmalen umgewandelt wurden. Anhand dieser 15 als neueste aufgenommenen Arbeitssignaturen A\*-O\* und ihrer relativen Positionen in Bezug auf den Ursprung des Arbeitskoordinatensystems $x_A$, $s_A$, das sich mit dem Fahrzeug 1 mitbewegt, wird nun durch Übereinstimmung mit den Referenzsignatur A-O mittels der Korrespondenztabelle die Position des Fahrzeugs 1 ermittelt. Betrachtet man beispielsweise die Arbeitssignatur E\*, so kann man feststellen, dass die entsprechende Referenzsignatur E 7-mal vorkommt. Dementsprechend sind 7 unterschiedliche Positionen in der Korrespondenztabelle aus Figur 6 abgelegt. Für die Arbeitssignatur E\* gibt es also 7 Möglichkeiten, um diese einer Referenzsignatur E und demnach einer Position zuzuordnen. Diese 7 Möglichkeiten sind in Figur 7 mit 7 Verbindungslinien gekennzeichnet. Die Zuordnung ist also mehrdeutig, denn von den 7 Möglichkeiten kann höchstens eine richtig sein. Um die Mehrdeutigkeit aufzulösen werden weitere Arbeitssignaturen A\*-O\* betrachtet, insbesondere alle 15 Arbeitssignaturen A\*-O\*. Der Übersicht halber sind für diese weiteren Arbeitssignaturen A\*-O\* nicht alle Verbindungslinien in Fig. 7 einzeichnen, sondern lediglich die korrekten Verbindungslinien. Diese so hervorgehobenen Korrespondenzen zeichnen sich gegenüber allen anderen Möglichkeiten dadurch aus, dass sie sich gegenseitig bestätigen. Werden bei dieser Zuordnung Fehler festgestellt, ist vorgesehen, die Referenzsignaturen A-O mittels der Arbeitssignaturen A\*-O\* zu aktualisieren.

Bildet man für eine beliebige dieser bestätigten Korrespondenzen die Differenz der Koordinaten gemäß Formel 1, so findet man hier übereinstimmend für die Position des Fahrzeugs $(x_F, s_F)$

$$\begin{pmatrix} x_F \\ s_F \end{pmatrix} = \begin{pmatrix} x \\ s \end{pmatrix} - \begin{pmatrix} x_A \\ s_A \end{pmatrix} = \begin{pmatrix} -2 \\ 75 \end{pmatrix} \qquad \text{(Formel 1)}$$

Damit ist die Position des Fahrzeugs 1 auf dem virtuellen Schienensystem 3 ermittelt. In diesem Ausführungsbeispiel befindet sich das Fahrzeug 1 also aktuell um zwei Einheiten nach links von der Mitte des virtuellen Schienensystems 3 versetzt bei der Streckenkoordinate 75.

Unter den vielen möglichen Zuordnungen sticht hier die in Figur 7 mit einem Quadrat gekennzeichnete Gruppe 19\* von 9 Arbeitssignaturen A\*-O\* heraus. In dieser Gruppe 19\* zeigen alle 9 Arbeitssignaturen A\*-O\* auf eine Gruppe 19 von Referenzsignaturen A-O mit benachbarten Positionen. Für keine der anderen Positionen finden sich ähnlich viele Übereinstimmungen. Die Zahl der Übereinstimmungen kann mit mehrstufigen Histogrammen ermittelt werden. Im Folgenden soll dies kurz dargestellt werden:

- Ein erstes Histogramm ist eindimensional und besitzt eine Auflösung von 1 m pro Histogramm-Bin, also eine grobe Auflösung. In das Histogramm werden alle Streckenpositionen $s_F$ des Fahrzeugs eingetragen, die sich bei der Bildung möglicher Korrespondenzen ergeben. Dabei wird jede Übereinstimmung in das entsprechende Histogramm-Bin der entsprechenden Position eingetragen
- Im Anschluss wird das Histogramm-Bin mit den meisten Übereinstimmungen ermittelt. Alternativ kann auch die Gruppe benachbarter Histogramm-Bins ermittelt werden, welche die meisten Übereinstimmungen aufweisen. Damit ist die Position entlang der Koordinate $s_A$ schon auf etwa 1 m genau bekannt.
- Diese beiden Schritte können mehrfach wiederholt werden, insbesondere wenn das virtuelle Schienensystem 3 in Abschnitte unterteilt ist und für jeden Abschnitt eine separate Korrespondenztabelle vorgesehen ist. Dann wird pro Korrespondenztabelle ein Histogramm erstellt und schließlich dasjenige Histogramm-Bin ermittelt, das insgesamt die meisten Übereinstimmungen aufweist; das zugehörige Histogramm lässt auf die zugehörige Korrespondenztabelle und somit auf den zugehörigen Abschnitt des virtuellen Schienensystems 3 rückschließen.
- Im nächsten Schritt wird die Position präzise ermittelt. Dazu wird ein zweidimensionales zweites Histogramm, das eine Auflösung von 1 cm x 1 cm aufweist, verwendet. Bei der zweiten Abstimmung nehmen nur die Korrespondenzen teil, welche im ersten Histogramm Übereinstimmungen mit dem ermittelten Histogramm-Bin der Position aufweisen oder in der örtlichen Nachbarschaft liegen.
- Im zweiten Histogramm wird erneut das Histogramm-Bin bzw. eine Gruppe von Histogramm-Bins mit den meisten Übereinstimmungen ermittelt. Bei der Gruppe von Histogramm-Bins kann zusätzlich eine Mittelung oder eine Gewichtung vorgesehen sein. Die zu diesem/n Histogramm-Bin(s) korrespondierende Position entspricht der Position des Fahrzeugs 1.

Ist die Position des Fahrzeugs 1 ermittelt, werden im Zuge einer Positionsverfolgung (Tracking) gesuchte nächste Positionen auf Basis der bereits gefundenen Position ermittelt. Demgemäß werden die Referenzsignaturen A-O auf ein Suchfeld, welches sich aus einem Suchbereich um die ermittelte Position oder um einen Suchbereich um die nächste Position ergibt, eingeschränkt.

Des Weiteren ist eine Steuerung des Fahrzeugs 1 vorgesehen. Für die Steuerung in Querrichtung wird die bereits bekannte Angabe von der seitlichen Position $x_F$ verwendet. Die Lenkung erfolgt so, dass diese seitliche Position $x_F$ verringert wird. Dies ist eine dem Fachmann bekannte Aufgabe aus der Regelungstechnik. Ist diese Größe beispielsweise positiv, bedeutet das, dass sich das Fahrzeug 1 in Fahrtrichtung rechts von der Mitte des virtuellen Schienensystems 3 befindet. Dann sollte ein Lenkengriff nach links erfolgen, der mindestens so groß gewählt ist, dass diese seitliche Position $x_F$ verringert wird, aber auch nicht zu groß, damit kein übermäßiges Überschwingen entsteht.

Bei der Steuerung in Längsrichtung geht es zunächst um die Fahrtrichtung. Diese ist bereits implizit in der Korrespondenztabelle festgelegt: In diesem Ausführungsbeispiel fährt das Fahrzeug 1 in Richtung steigender Werte für die Streckenposition $s_F$. Die Kenntnis über die Fahrtrichtung wird bei der Positionsverfolgung genutzt, um die nächste Position vorherzusagen und ein Suchfeld vorzugeben. Ebenso kann das Fahrzeug auch in die entgegengesetzte Richtung fahren. Falls das Fahrzeug hierfür wendet, bedeutet dies im Allgemeinen, dass der Sensor dann um 180° gedreht ist. Dies wird durch entsprechende Drehung des zweidimensionalen Sensorsignals oder durch geeignete Berücksichtigung der Drehung bei der Bildung der Arbeitssignaturen A*-O* kompensiert. Bei der Spurführung und Steuerung des Fahrzeugs werden die bereits erläuterten Zusatzmerkmale berücksichtigt, die in der Korrespondenztabelle abgelegt sind.

## Patentansprüche

1.  Verfahren zur automatischen Führung eines Fahrzeugs (1) entlang vorgegebener Wege (3),

    wobei Signal-Messpunkte (11) eines Untergrunds (2), über den sich das Fahrzeug (1) bewegt und/oder bewegen wird, erfasst werden,
    wobei innerhalb einer Schablone (15, 15 a-e), die eine Mehrzahl von Signal-Messpunkten (11) des Sensorsignals abdeckt, mehrere Unterschablonen (16) vorgesehen sind, wobei für jede Unterschablone (16) aus den Werten und/oder den Vektoren der Signal-Messpunkte (11), die zumindest teilweise von der jeweiligen Unterschablone (16) abgedeckt werden oder sich in deren Umfeld befinden, ein Unterschablonen-Messwert oder -vektor gebildet wird,
    wobei für die Unterschablonen (16) eine Vorverarbeitung durchgeführt wird, wobei aus den vorverarbeiteten Unterschablonen-Messwerten/- Vektoren ein Merkmal gebildet wird, wobei durch gewichtete Verknüpfungen der Unterschablonen-Werte/-Vektoren und zumindest einer Schwellwertentscheidung eine zu dem Merkmal zugehörige Signatur (A*-O*, A-O, S) gebildet wird,
    wobei geprüft wird, ob die zumindest eine Arbeitssignatur (A*-O*) mit zumindest einer Referenzsignatur (A-O, S) der vorgegebenen Wege (3) übereinstimmt, wobei der zumindest einen Referenzsignatur (A-O, S) eine Position auf den vorgegebenen Wegen (3) zugeordnet ist, und, wenn die zumindest eine Arbeitssignatur (A*-O*) und die zumindest eine Referenzsignatur (A-O, S) übereinstimmen, auf die Position des Fahrzeugs (1) auf den vorgegebenen Wegen (3) geschlossen wird, eine Gruppe von Arbeitssignaturen (A*-O*) wird mit einer Gruppe von Referenzsignaturen (A-O, S) auf Übereinstimmung geprüft und auf die Position des Fahrzeugs (1) auf den vorgegebenen Wegen (3) wird geschlossen, wenn die Zahl der Übereinstimmungen zwischen den Arbeitssignaturen (A*-O*) und den Referenzsignaturen (A-O, S) am höchsten ist.

2.  Verfahren nach Anspruch 1, **dadurch gekennzeichnet, dass** die höchste Zahl der Übereinstimmungen zwischen den Arbeitssignaturen (A*-O*) und den Referenzsignaturen (A-O, S) aus zumindest einem Histogramm der Übereinstimmungen ermittelt wird.

3.  Verfahren nach einem der vorherigen Ansprüche, **dadurch gekennzeichnet, dass** die Zuordnung der Referenzsignaturen (A-O, S) zu den Positionen auf den vorgegebenen Wegen (3) in einer Korrespondenztabelle abgelegt sind.

4.  Verfahren nach Anspruch 3, **dadurch gekennzeichnet, dass** die Korrespondenztabelle durch Übermittlung von zumindest einem Sender erhalten wird.

5.  Verfahren nach einem der vorherigen Ansprüche, **dadurch gekennzeichnet, dass**, wenn die Position des Fahrzeugs (1) auf den vorgegebenen Wegen (3) ermittelt wurde, bei einer Positionsverfolgung die Referenzsignaturen (A-O, S) für den Vergleich bei der Ermittlung einer nächsten Position auf diejenigen Referenzsignaturen (A-O, S) eingeschränkt werden, die sich innerhalb eines Suchfelds befinden, welches sich aus einem Suchbereich um die ermittelte Position oder um einen Suchbereich um die nächste Position ergibt.

6.  Verfahren nach einem der vorherigen Ansprüche, **dadurch gekennzeichnet, dass**, wenn die Position des Fahrzeugs (1) auf den vorgegebenen Wegen (3) ermittelt wurde, die Referenzsignaturen (A-O, S) zumindest teilweise mit Hilfe der Arbeitssignaturen (A*-O*) aktualisiert werden.

7.  Verfahren nach einem der vorherigen Ansprüche, **dadurch gekennzeichnet, dass**, abhängig von der Position des Fahrzeugs (1) auf den vorgegebenen Wegen (3), Steuersignale für das Fahrzeug (1) bereitgestellt werden, mit denen die Bewegung des Fahrzeugs (1) gesteuert wird.

8.  Verfahren nach Anspruch 7, **dadurch gekennzeichnet, dass** Steuersignale für eine Querrichtung zu den vorgegebenen Wegen (3) vorgesehen sind, welche eine Lenkung des Fahrzeugs (1) steuern, und dass Steuersignale für eine Längsrichtung zu den vorgegebenen Wegen (3) vorgesehen sind, welche den Antrieb des Fahrzeugs (1) steuern.

9.  Computerprogramm, welches eingerichtet ist, jeden Schritt des Verfahrens nach einem der Ansprüche 1 bis 8 durchzuführen.

10.  Maschinenlesbares Speichermedium, auf welchem ein Computerprogramm nach Anspruch 9 gespeichert ist.

11.  Elektronisches Steuergerät (20), welches eingerichtet ist, um mittels eines Verfahrens nach einem der Ansprüche 1 bis 8 ein Fahrzeug entlang vorgegebener Wege automatisch zu führen.

12.  Fahrzeug (1), das eine Bilderfassungsvorrichtung (4) zum Erkennen von Merkmalen eines Untergrunds (2) aufweist und eingerichtet ist, mit einem Verfahren gemäß einem der Ansprüche 1 bis 8 entlang vorgegebener Wege (3) automatisch geführt zu werden.

13.  Fahrzeug (1) nach Anspruch 12 **gekennzeichnet durch** eine Beleuchtungsvorrichtung (5), welche den Untergrund (2), der von der Bilderfassungsvorrichtung (4) erfasst wird, beleuchtet.

14.  Fahrzeug (1) nach Anspruch 12 oder 13, **dadurch gekennzeichnet, dass** das Fahrzeug (1) einen Richtungssensor (9) aufweist.

## Claims

1.  Method for automatically guiding a vehicle (1) along predefined paths (3),

    wherein signal measurement points (11) of an underlying surface (2) over which the vehicle (1) is moving and/or will move are detected,
    wherein within a template (15, 15 a-e) covering a plurality of signal measurement points (11) of the sensor signal, a plurality of sub-templates (16) are provided, wherein a sub-template measurement value or vector is formed for each sub-template (16) from the values and/or the vectors of the signal measurement points (11) which are at least partly covered by the respective sub-template (16) or are located in the environment thereof,
    wherein preprocessing is carried out for the sub-templates (16), wherein a feature is formed from the preprocessed sub-template measurement values/vectors, wherein a signature (A*-O*, A-0, S) associated with the feature is formed by weighted combinations of the sub-template values/vectors and at least one threshold value decision,
    wherein a check is made to ascertain whether the at least one operating signature (A*-O*) matches at least one reference signature (A-0, S) of the predefined paths (3), wherein the at least one reference signature (A-0, S) is assigned a position on the predefined paths (3),
    and, if the at least one operating signature (A*-O*) and the at least one reference signature (A-0, S) match, the position of the vehicle (1) on the predefined paths (3) is deduced, a group of operating signatures (A*-O*) is checked with a group of reference signatures (A-O, S) in respect of matching and the position of the vehicle (1) on the predefined paths (3) is deduced if the number of matches between the operating signatures (A*-O*) and the reference signatures (A-O, S) is the highest.

2.  Method according to Claim 1, **characterized in that** the highest number of matches between the operating signatures (A*-O*) and the reference signatures (A-O, S) is determined from at least one histogram of the matches.

3.  Method according to either of the preceding claims, **characterized in that** the assignment of the reference signatures (A-O, S) to the positions on the predefined paths (3) is stored in a correspondence table.

4. Method according to Claim 3, **characterized in that** the correspondence table is obtained by communication from at least one transmitter.

5. Method according to any of the preceding claims, **characterized in that**, if the position of the vehicle (1) on the predefined paths (3) has been determined, in the course of position tracking, the reference signatures (A-O, S) for the comparison when determining a next position are restricted to those reference signatures (A-O, S) which are located within a search field which arises from a search area around the determined position or around a search area around the next position.

6. Method according to any of the preceding claims, **characterized in that**, if the position of the vehicle (1) on the predefined paths (3) has been determined, the reference signatures (A-O, S) are at least partly updated with the aid of the operating signatures (A\*-O\*).

7. Method according to any of the preceding claims, **characterized in that**, depending on the position of the vehicle (1) on the predefined paths (3), control signals for the vehicle (1) are provided, the movement of the vehicle (1) being controlled by said control signals.

8. Method according to Claim 7, **characterized in that** control signals for a transverse direction with respect to the predefined paths (3) are provided, which control steering of the vehicle (1), and **in that** control signals for a longitudinal direction with respect to the predefined paths (3) are provided, which control the drive of the vehicle (1).

9. Computer program configured to carry out out each step of the method according to any of Claims 1 to 8.

10. Machine-readable storage medium on which a computer program according to Claim 9 is stored.

11. Electronic control unit (20) configured to automatically guide a vehicle along predefined paths by means of a method according to any of Claims 1 to 8.

12. Vehicle (1) which comprises an image capturing device (4) for recognizing features of an underlying surface (2) and is configured to be automatically guided along predefined paths (3) by a method according to any of Claims 1 to 8.

13. Vehicle (1) according to Claim 12, **characterized by** an illumination device (5) which illuminates the underlying surface (2) captured by the image capturing device (4).

14. Vehicle (1) according to Claim 12 or 13, **characterized in that** the vehicle (1) comprises a direction sensor (9).

**Revendications**

1. Procédé de guidage automatique d'un véhicule (1) le long de trajectoires prédéfinies (3),

des points de mesure de signal (11) d'un sol (2) au-dessus duquel le véhicule (1) se déplace et/ou sera déplacé étant détectés,
plusieurs sous-gabarits (16) étant prévus à l'intérieur d'un gabarit (15, 15 a-e) qui recouvre une pluralité de points de mesure de signal (11) du signal de capteur, une valeur de mesure ou un vecteur de sous-gabarit étant formé pour chaque sous-gabarit (16) à partir des valeurs et/ou des vecteurs des points de mesure de signal (11) qui sont au moins partiellement recouverts par le sous-gabarit (16) respectif ou qui se trouvent dans son environnement,
un prétraitement étant effectué pour les sous-gabarits (16), une caractéristique étant formée à partir des valeurs de mesure/vecteurs de sous-gabarit prétraités, une signature (A\*-O\*, A-O, S) associée à la caractéristique étant formée par des combinaisons pondérées des valeurs/vecteurs de sous-gabarit et d'au moins une décision de valeur de seuil,
un contrôle étant effectué afin de vérifier si l'au moins une signature de travail (A\*-O\*) coïncide avec au moins une signature de référence (A-O, S) des trajectoires prédéfinies (3), une position sur les trajectoires prédéfinies (3) étant associée à l'au moins une signature de référence (A-O, S),
et, si l'au moins une signature de travail (A\*-O\*) et l'au moins une signature de référence (A-O, S) coïncident, la position du véhicule (1) sur les trajectoires prédéfinies (3) est déduite, un groupe de signatures de travail (A\*-O\*) est comparé à un groupe de signatures de référence (A-O, S) et la position du véhicule (1) sur les trajectoires prédéfinies (3) est déduite lorsque le nombre de concordances entre les signatures de travail (A*-O*) et les signatures de référence (A-O, S) est le plus élevé.

2. Procédé selon la revendication 1, **caractérisé en ce que** le nombre le plus élevé de concordances entre les signatures de travail (A*-O*) et les signatures de référence (A-O, S) est déterminé à partir d'au moins un histogramme des concordances.

3. Procédé selon l'une des revendications précédentes, **caractérisé en ce que** l'association des signatures de référence (A-O, S) aux positions sur les trajectoires prédéfinies (3) est stockée dans une table de correspondance.

4. Procédé selon la revendication 3, **caractérisé en ce que** la table de correspondance est obtenue par transmission à partir d'au moins un émetteur.

5. Procédé selon l'une des revendications précédentes, **caractérisé en ce que**, lorsque la position du véhicule (1) sur les trajectoires prédéfinies (3) a été déterminée, lors d'un suivi de position, les signatures de référence (A-O, S) pour la comparaison lors de la détermination d'une position suivante sont limitées aux signatures de référence (A-O, S) qui se trouvent à l'intérieur d'un champ de recherche, lequel résulte d'une zone de recherche autour de la position déterminée ou d'une zone de recherche autour de la position suivante.

6. Procédé selon l'une des revendications précédentes, **caractérisé en ce que**, lorsque la position du véhicule (1) sur les trajectoires prédéfinies (3) a été déterminée, les signatures de référence (A-O, S) sont mises à jour au moins partiellement à l'aide des signatures de travail (A*-O*).

7. Procédé selon l'une des revendications précédentes, **caractérisé en ce que**, en fonction de la position du véhicule (1) sur les trajectoires prédéfinies (3), des signaux de commande sont fournis pour le véhicule (1), avec lesquels le mouvement du véhicule (1) est commandé.

8. Procédé selon la revendication 7, **caractérisé en ce que** des signaux de commande sont prévus pour une direction transversale par rapport aux trajectoires prédéfinies (3), lesquels commandent une direction du véhicule (1), et **en ce que** des signaux de commande sont prévus pour une direction longitudinale par rapport aux trajectoires prédéfinies (3), lesquels commandent la propulsion du véhicule (1).

9. Programme informatique, qui est conçu pour exécuter chaque étape du procédé selon l'une des revendications 1 à 8.

10. Support de stockage lisible par machine, sur lequel est stocké un programme informatique selon la revendication 9.

11. Contrôleur électronique (20), lequel est conçu pour guider automatiquement un véhicule le long de trajectoires prédéfinies au moyen d'un procédé selon l'une des revendications 1 à 8.

12. Véhicule (1), qui possède un dispositif d'acquisition d'images (4) destiné à reconnaître des caractéristiques d'un sol (2) et qui est conçu pour être guidé automatiquement le long de trajectoires prédéfinies (3) avec un procédé selon l'une des revendications 1 à 8.

13. Véhicule (1) selon la revendication 12, **caractérisé par** un dispositif d'éclairage (5), lequel éclaire le sol (2) qui a été détecté par le dispositif d'acquisition d'images (4) .

14. Véhicule (1) selon la revendication 12 ou 13, **caractérisé en ce que** le véhicule (1) possède un capteur de direction (9).

**Fig. 1**

**Fig. 2**

Fig. 3

## Fig. 4

# Fig. 5

# Fig. 6

| | (x,s) |
|---|---|
| Ⓐ | (2,67) (-1,68) (-2,69) (2,75) (-1,77) (-1,79) (2,81) |
| Ⓑ | (-1,64) (-2,67) (0,71) (-1,73) (2,76) (1,77) (0,80) (-1,83) |
| Ⓒ | (2,65) (1,67) (1,71) (2,72) (0,76) (-2,79) (2,82) |
| Ⓓ | (2,64) (1,64) (0,68) (1,73) (2,74) (-1,80) |
| Ⓔ | (1,65) (-2,66) (0,69) (-2,74) (0,79) (1,82) (-2,83) |
| Ⓕ | (-2,68) (-1,72) (-2,76) (-2,80) (-1,81) |
| Ⓖ | (0,64) (-2,70) (1,70) (1,74) (-1,78) (1,80) (2,80) (0,81) |
| Ⓗ | (-1,65) (-1,69) (0,72) (1,76) (-2,77) (1,79) |
| Ⓘ | (2,66) (1,68) (-2,72) (0,75) (2,77) (-2,78) (2,78) (-2,82) |
| Ⓙ | (-1,67) (-1,71) (2,71) (0,74) (1,81) |
| Ⓚ | (0,66) (2,68) (1,72) (1,75) (0,82) |
| Ⓛ | (-2,65) (0,67) (2,70) (0,73) (-1,74) (-1,82) (2,83) |
| Ⓜ | (1,66) (-1,70) (2,73) (-1,76) (1,78) (-2,81) |
| Ⓝ | (0,65) (1,69) (-2,71) (-1,75) (0,77) (2,79) (1,83) |
| Ⓞ | (2,64) (-1,66) (2,69) (0,70) (-2,73) (-2,75) (0,78) (0,83) |

Fig. 7

**IN DER BESCHREIBUNG AUFGEFÜHRTE DOKUMENTE**

**In der Beschreibung aufgeführte Patentdokumente**

- DE 102013202075 A1
- WO 2015090399 A1